# EUROPÄISCHE PATENTSCHRIFT

(11) **EP 3 491 983 B1**
(45) Veröffentlichungstag und Bekanntmachung des Hinweises auf die Patenterteilung: **09.02.2022**
(21) Anmeldenummer: 18189108.6
(22) Anmeldetag: 15.08.2018
(51) Int. Cl.: A47K 10/04

(54) **VORRICHTUNG ZUR VERWENDUNG IM HAUSHALT, SANITÄRBEREICH ODER GARTEN**
DEVICE FOR USE IN THE HOUSEHOLD, SANITARY AREA OR GARDEN
APPAREIL À UTILISER DANS LA MAISON, LES SANITAIRES OU LE JARDIN

(30) Priorität: 30.11.2017 DE 202017107318 U
(43) Veröffentlichungstag der Anmeldung: 05.06.2019
(73) Patentinhaber: BAHAG Baus Handelsgesellschaft AG, 68167 Mannheim (DE)
(72) Erfinder:
(74) Vertreter: Wesch, Arno

(56) Entgegenhaltungen:
- US-A- 1 695 429
- US-B1- 7 316 324

## Beschreibung

Die Erfindung betrifft eine Vorrichtung nach dem Oberbegriff des Patentanspruchs 1.

Aus der US 7,316,324 B1 und der US 1 695 429 A sind Gelenke dieser Art, insbesondere für Handtuchhalter, bekannt geworden.

Aus der DE 70 27 923 U ist ein Handtuchhalter mit mindestens einem Haltearm bekannt, der teleskopartig ausziehbar ist. Der Haltearm ragt von einem Gelenk in einer Raumrichtung ab und kann so geschwenkt werden, dass er an einer Wand anliegt. Es kann auch vorgesehen sein, dass mehrere Haltearme vom Gelenk abragen. Ein Haltearm kann in einer Schwenkstellung durch eine Schiebermuffe arretierbar sein.

Bei dem Handtuchhalter der DE 70 27 923 U ist nachteilig, dass die Haltearme gegen eine Wand geschwenkt werden müssen, um zu verhindern, dass sie in unerwünschter Weise in einen Raum oder ein Badezimmer hineinragen. Weiter ist nachtteilig, dass eine Schiebermuffe vorgesehen sein muss, um einen Haltearm zu arretieren. Das Gelenk muss daher mit einem weiteren separaten Bauteil, nämlich einer Schiebermuffe, kombiniert werden.

Der Erfindung liegt vor diesem Hintergrund die Aufgabe zu Grunde, ein Gelenk anzugeben, welches bei bauteilearmem Aufbau erlaubt, Strukturen, insbesondere längliche Haltearme, möglichst platzsparend und derart anzuordnen, dass diese bei Bedarf problemlos nutzbar sind.

Die vorliegende Erfindung löst die zuvor genannte Aufgabe durch die Merkmale des Patentanspruchs 1.

Erfindungsgemäß ist zunächst erkannt worden, dass ein Gelenk, welches mindestens einen Schwenkkörper umfasst, der um eine Schwenkachse relativ zu einem Statorkörper verschwenkbar ist, ein Verschwenken von Strukturen ermöglicht, die mit dem Schwenkkörper verbunden oder einstückig mit diesem ausgebildet sind.

Weiter ist erkannt worden, dass ein Verschieben der Schwenkachse und des Schwenkkörpers relativ zum Statorkörper ermöglicht, den Schwenkkörper von einem Bewegungszustand in einen anderen zu verbringen.

Erfindungsgemäß ist es möglich, Freiheitsgrade des Schwenkköpers je nach Bedarf einzustellen. Der Schwenkkörper kann einerseits in einer ersten Lage verschwenkt werden und durch Verschieben in eine andere Lage oder weitere Lagen verbracht werden, in der bzw. in denen Freiheitsgrade seiner Bewegbarkeit verändert sind.

Durch das Verschwenken und Verschieben kann der Schwenkkörper so ausgerichtet werden, dass insbesondere längliche Strukturen in die räumlichen Positionen verbracht werden, in denen sie zur Nutzung benötigt werden. Der Schwenkkörper ist daher translatorisch und zumindest teilweise rotatorisch, nämlich schwenkbar, beweglich.

Vor diesem Hintergrund ist der Schwenkkörper relativ zum Statorkörper teleskopartig verschiebbar, um entweder das Verschwenken des Schwenkkörpers zuzulassen oder dessen Verschwenken zu verhindern. Durch einfaches geführtes Verschieben des Schwenkkörpers kann einer seiner Freiheitsgrade, nämlich seine Verschwenkbarkeit, hergestellt oder verhindert werden. Die teleskopartige Führung erlaubt eine definierte räumliche Ausrichtung des Schwenkkörpers bzw. einer Struktur, die mit diesem wirkverbunden ist.

Der Schwenkkörper ist aus einer Hängelage, in welcher er verschwenkbar ist, in eine Schiebelage, in welcher er relativ zum Statorkörper verschiebbar ist, verschwenkbar, wobei der Schwenkkörper zumindest in einer Position seiner Schiebelage nicht mehr verschwenkbar, jedoch in eine Fixierlage verschiebbar ist. In der Hängelage können Strukturen, wie lange Haltearme für Textilien, orthogonal zu einem Boden oder einer Aufstellfläche angeordnet werden. Lange Haltearme können einfach in Richtung Boden hängen und sich beispielsweise an einen Ständer anlegen. Hierdurch kann Platz gespart werden, weil die Strukturen oder langen Haltearme nicht in einen Raum hineinragen oder sperrig vom Ständer abstehen.

Wenn man die Strukturen oder langen Haltearme parallel zum Boden oder in einem anderen Winkel geneigt zum Boden ausrichten will, um daran Textilien aufzuhängen, kann man sie einfach ausklappen und geringfügig verschieben. Nach dem Verschieben können die Strukturen bzw. Haltearme nicht mehr in Richtung Boden klappen, sondern sind bezüglich einem Verschwenken fixiert bzw. am Verschwenken gehindert.

Schließlich können die Haltearme durch Verschieben in eine Fixierlage verrastet werden, so dass ein besonders fester Halt für Textilien gegeben ist.

Der Schwenkkörper ist auf den Statorkörper aufschiebbar. Durch das Aufschieben ist eine Führung und Stabilisierung des Schwenkkörpers ermöglicht. Das Führen kann durch einen hülsenartigen Abschnitt gewährleistet werden, der den Statorkörper zumindest abschnittsweise umfängt und dadurch ein Verschwenken des Schwenkkörpers verhindert.

Der Schwenkkörper könnte nach dem Verschieben in einer Fixierlage durch Rastmittel oder Arretiermittel reversibel arretierbar sein. Durch Rastmittel wie Nocken, Erhebungen oder Rastnasen, die in komplementäre Gegenstücke eingreifen, kann ein unerwünschtes Verschieben verhindert werden. Der Schwenkkörper ist derart reversibel fixiert, dass er bei Bedarf händisch und/ oder ohne den Einsatz von Werkzeugen leicht wieder lösbar ist und in einen verschiebbaren bzw. verschwenkbaren Zustand verbracht werden kann.

Der Statorkörper weist eine nut- oder schlitzartige Ausnehmung auf, wobei die Schwenkachse innerhalb der Ausnehmung verschieb- und verfahrbar ist. Hierdurch ist eine translatorische Führung des Schwenkkörpers ermöglicht. Des Weiteren wird verhindert, dass der Schwenkkörper sich vom Statorkörper in unerwünschter Weise wegbewegt, insbesondere von diesem getrennt wird.

Die Ausnehmung könnte einen Anschlag aufweisen, über den die Schwenkachse nicht hinausschiebbar ist. Hierdurch ist sichergestellt, dass der Schwenkkörper nicht vom Statorkörper getrennt wird, wenn sich der Schwenkkörper in seiner Hängelage befindet. In der Hängelage kann der Schwenkkörper sich bevorzugt nach Art eines Pendels bewegen.

Die Schwenkachse könnte als Stiftelement ausgestaltet sein, welches dem Schwenkkörper zugeordnet ist. Das Stiftelement kann als Bolzen, Stift, Splint, Schraube oder ähnliches ausgestaltet sein. Durch dieses längliche Element ist der Schwenkkörper einerseits an den Statorkörper verliersicher angelenkt und zugleich innerhalb seiner Ausnehmung translatorisch verfahrbar.

Das hier beschriebene Gelenk kann in einer Vielzahl von Vorrichtungen Verwendung finden. Das Gelenk wird in Vorrichtungen verwendet, die im Haushalt oder Sanitärbereich oder Garten eingesetzt werden, weil das Gelenk einen platzsparenden Einsatz ermöglicht. Des Weiteren erlaubt das Gelenk eine Einsparung von Verpackungsmaterial, wenn die Vorrichtungen transportiert werden.

Vor diesem Hintergrund ist denkbar, dass die Vorrichtung in einer Garderobe verwendet wird oder als solche ausgestaltet ist. Weiter ist denkbar, dass die Vorrichtung in einem Toilettenpapierhalter verwendet wird oder als solcher ausgestaltet ist. Die Vorrichtung könnte als Haken verwendet werden oder als solcher ausgestaltet sein. Die Vorrichtung könnte in einer Schlauchhalterung, insbesondere Gartenschlauchhalterung, verwendet werden oder als solche ausgestaltet sein. Die Vorrichtung könnte in einer Ablage verwendet werden oder als solche ausgestaltet sein. Die Vorrichtung könnte in einem Behältnis verwendet werden oder als solches ausgestaltet sein. Die Vorrichtung könnte in einer Spiegelhalterung verwendet werden oder als solche ausgestaltet sein.

Die Vorrichtung könnte als Halter, insbesondere Handtuchhalter ausgestaltet sein, wobei mindestens ein Haltearm mit dem Schwenkkörper verbunden oder einstückig mit diesem ausgebildet ist. Im Sanitärbereich, in Wasch- oder Trockenräumen oder in Badezimmern ist das Gelenk vorteilhaft einsetzbar, weil es mit Haltearmen zusammenwirken kann, welche Handtücher, Textilien oder allgemein Wäsche tragen.

Ein Haltearm kann aus Metall oder Kunststoff gefertigt sein. Der Haltearm ist derart lang gewählt, dass dieser möglichst effektiv Wäschestücke tragen kann. Der Haltearm selbst kann durch teleskopartiges Ausziehen verlängerbar sein.

Der Statorkörper könnte mit einem Ständer oder einer Halterung, insbesondere an einer Wand, verbunden oder einstückig mit diesem bzw. dieser ausgebildet sein. Ein Ständer erlaubt das Aufstellen eines Halters auf einem Fußboden. Der Ständer kann eine Stange umfassen, die in ein Fußteil eingeschraubt oder eingesteckt ist.

Dem Ständer könnte ein Aufsatz und/ oder eine oder mehrere Stangen zugeordnet sein. Ein Aufsatz kann als Gewicht ausgestaltet sein und einen Halter oder Ständer stabilisieren. Eine oder mehrere Stangen können vorgesehen sein, um Textilien oder andere Utensilien, wie beispielsweise Seife oder Toilettenpapier, zu tragen.

In der Zeichnung zeigen
- Fig. 1: eine Ansicht eines Halters mit zwei Gelenken, wobei zwei Haltearme parallel zur Stange eines Ständers angeordnet sind, nämlich orthogonal zum Fußboden oder einer Aufstellfläche orientiert sind, herabhängen und in dieser Hängelage leicht pendeln können,
- Fig. 2: eine Ansicht des Halters gemäß Fig. 1, wobei der linke Haltearm am Ständer reversibel so fixiert ist, dass dieser nicht mehr beweglich ist, wobei der nicht bewegliche Haltearm parallel zum Fußboden oder zur Aufstellfläche und orthogonal zur Stange orientiert ist,
- Fig. 3: eine Ansicht des Halters gemäß Fig. 1 und Fig. 2, wobei beide Haltearme am Ständer reversibel so fixiert sind, dass diese nicht mehr beweglich sind, wobei beide nicht bewegliche Haltearme parallel zum Fußboden oder zur Aufstellfläche orientiert sind, und
- Fig. 4: eine Abwandlung des Halters gemäß Fig. 3, wobei dem Fußteil ein Aufsatz und eine weitere Stange zugeordnet sind.

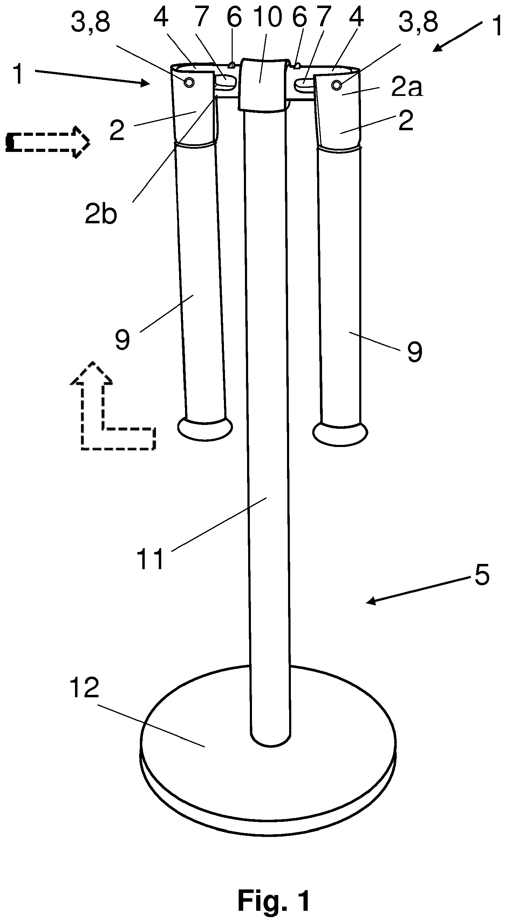

Fig. 1 zeigt ein Gelenk 1, umfassend mindestens einen Schwenkkörper 2, der um eine Schwenkachse 3 relativ zu einem Statorkörper 4 verschwenkbar ist. Konkret sind zwei Gelenke 1 dargestellt, die einander gegenüberliegen.

Der gestrichelte und gewinkelte Pfeil zeigt an, dass der linke Schwenkkörper 2 gemäß Fig. 1 nach links außen um 90° nach oben verschwenkbar ist. Der rechte Schwenkkörper 2 gemäß Fig. 1 ist ebenfalls um 90° nach oben verschwenkbar, jedoch unter Verschwenken nach rechts außen.

Die Schwenkachse 3 und der Schwenkkörper 2 sind relativ zum Statorkörper 4 verschiebbar.

Der gerade gestrichelte Pfeil zeigt an, dass der linke Schwenkkörper 2 gemäß Fig. 1 translatorisch nach rechts verschiebbar ist. Der rechte Schwenkkörper 2 ist nach links translatorisch verschiebbar

Konkret ist in Fig. 1 ein Halter 5, nämlich ein Handtuchhalter, gezeigt, der zwei Gelenke 1 aufweist.

Der Schwenkkörper 2 ist relativ zum Statorkörper 4 teleskopartig verschiebbar, um entweder das Verschwenken des Schwenkkörpers 2 zuzulassen oder dessen Verschwenken zu verhindern. Sobald die teleskopartige Führung einsetzt, ist ein Verschwenken des Schwenkkörpers 2 nicht mehr möglich.

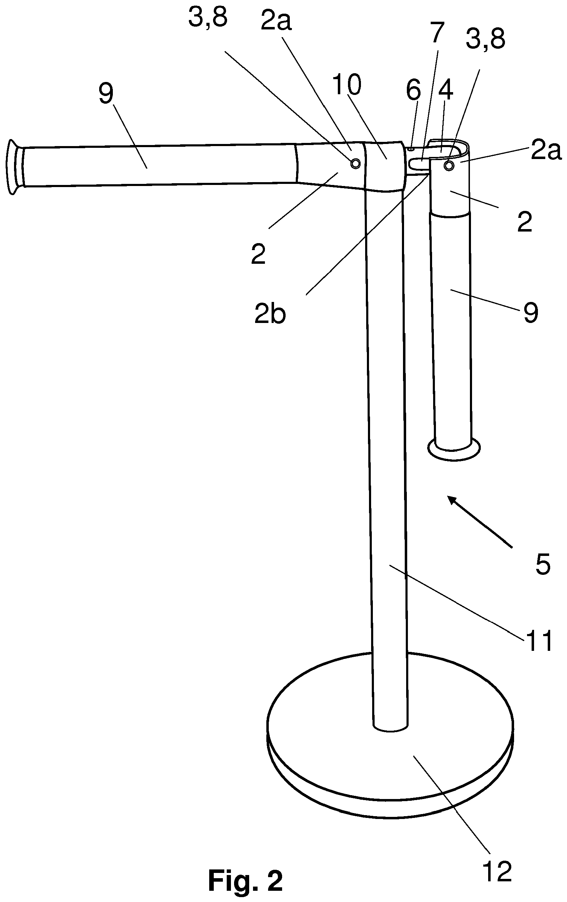

Fig. 1 und 2 zeigen konkret, dass ein Schwenkkörper 2 aus einer Hängelage, in welcher er verschwenkbar ist, in eine Schiebelage verschwenkbar ist, in welcher er relativ zum Statorkörper 4 verschiebbar ist.

Die Hängelage ist in Fig. 1 dargestellt. Beide Schwenkkörper 2 befinden sich in der Hängelage. In der Hängelage ist ein Pendeln der Schwenkkörper 2 um die Schwenkachse 3 noch möglich.

Zum Verbringen in die Schiebelage wird der linke Schwenkkörper 2 aus seiner in Fig. 1 gezeigten Hängelage um 90° nach links außen und oben geschwenkt, bis er die Schiebelage erreicht hat. Die Schiebelage ermöglicht einerseits den Übergang in das teleskopartige Aufschieben des Schwenkkörpers 2 auf den Statorkörper 4 und andererseits das Schieben des Schwenkkörpers 2 in eine Endlage, nämlich die Fixierlage.

Sobald der Schwenkkörper 2 ein gewisses Maß auf den Statorkörper 4 aufgeschoben ist, setzt die teleskopartige Führung ein und der Schwenkkörper 2 ist in dieser Position seiner Schiebelage nicht mehr verschwenkbar, sondern nur noch translatorisch bewegbar. Der linke Schwenkkörper 2 gemäß Fig. 2 ist bereits in die Fixierlage verschoben. Die Fixierlage ist mit Bezug zum linken Schwenkkörper 2 in Fig. 2 dargestellt.

Der Schwenkkörper 2 ist auf den Statorkörper 4 aufschiebbar. Hierzu weist der Schwenkkörper 2 einen hülsenartigen Abschnitt 2a auf, der den im Wesentlichen rohrartigen Statorkörper 4 abschnittsweise umfangen kann.

Der hülsenartige Abschnitt 2a ist in einem oberen Bereich des Schwenkkörpers 2 ausgebildet. Der hülsenartige Abschnitt 2a ist derart geschlossen ausgebildet, dass der Statorkörper 4 diesen nicht durchgreifen kann. Der hülsenartige Abschnitt 2a verhindert und sperrt insoweit ein zu weites Verschwenken bzw. Klappen des Schwenkkörpers 2 nach oben.

Dem hülsenartigen Abschnitt 2a diametral gegenüber liegt ein Eingriffabschnitt 2b. Beim Verschwenken des Schwenkkörpers 2 nach unten, also in Richtung eines Fußteils 12, kann der Statorkörper 4 in den Eingriffabschnitt 2b eingreifen, so dass ein Verschwenken bzw. Klappen des Schwenkkörpers 2 nach unten möglich und nicht gesperrt ist.

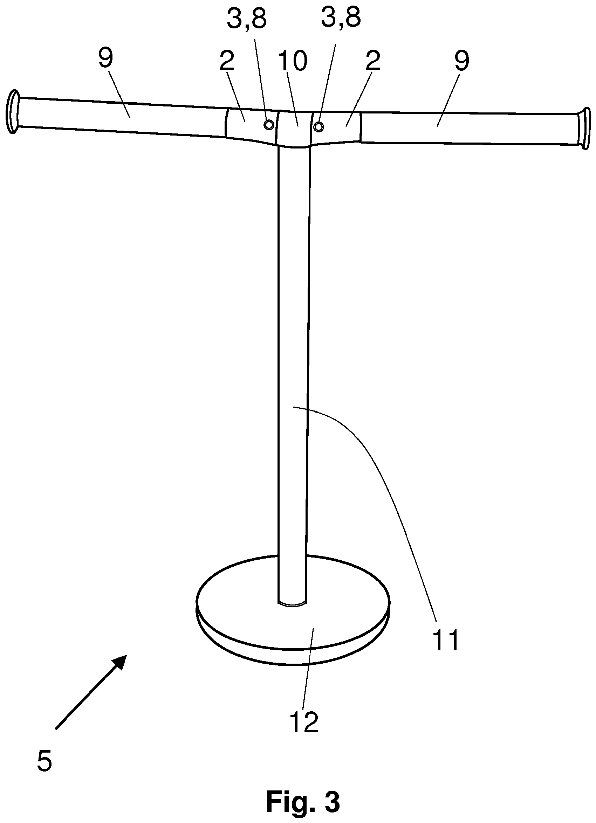

Der Schwenkkörper 2 ist nach dem Verschieben in der Fixierlage durch Rastmittel oder Arretiermittel 6 reversibel arretiert. Dieser Zustand ist mit Bezug zum linken Schwenkkörper 2 in Fig. 2 und mit Bezug zu beiden Schwenkkörpern 2 in Fig. 3 dargestellt. In Fig. 3 sind beide Schwenkkörper 2 in der Fixierlage.

Als Arretiermittel 6 ist auf dem Statorkörper 4 eine Erhebung oder Noppe ausgebildet, welche in eine Vertiefung des Schwenkkörpers 2 einrasten kann. Das Einrasten kann händisch und ohne den Einsatz von Werkzeugen wieder gelöst werden, so dass der Schwenkkörper 2 wieder verschiebbar und translatorisch bewegbar ist, um zurück in seine Hängelage zu gelangen.

Fig. 1 zeigt, dass der Statorkörper 4 eine nut- oder schlitzartige Ausnehmung 7 aufweist, wobei die Schwenkachse 3 innerhalb der Ausnehmung 7 verschieb- und verfahrbar ist. Die Ausnehmung 7 ist in Längsrichtung beidseits durch Material geschlossen und als durchgreifbarer Leerraum ausgebildet.

Die Ausnehmung 7 weist einen Anschlag auf, über den die Schwenkachse 3 nicht hinausschiebbar ist. Der Anschlag wird durch das Material gebildet, welches die Ausnehmung 7 lateral außen begrenzt.

Die Schwenkachse 3 ist als Stiftelement 8 ausgestaltet ist, welches dem Schwenkkörper 2 zugeordnet ist. Das Stiftelement 8 durchgreift die Ausnehmung 7.

Die Fig. 1 bis 3 zeigen konkret einen Halter 5, nämlich einen Handtuchhalter, der mindestens ein Gelenk 1 umfasst. Der Halter 5 weist mindestens einen Haltearm 9 auf, der mit dem Schwenkkörper 2 verbunden ist. Konkret sind zwei solche Gelenke 1 und zwei solche Haltearme 9 dargestellt. Fig. 3 zeigt, dass die klappbaren Haltearme 9 hochgeklappt und kolinear angeordnet sind. Die Haltearme 9 sind parallel zu einem Boden orientiert.

Der Statorkörper 4 ist mit einem Ständer 10 verbunden. Der Ständer 10 weist eine Stange 11 auf, die mit einem Fußteil 12 verschraubt ist. Das Fußteil 12 ist als Scheibe oder Platte ausgestaltet.

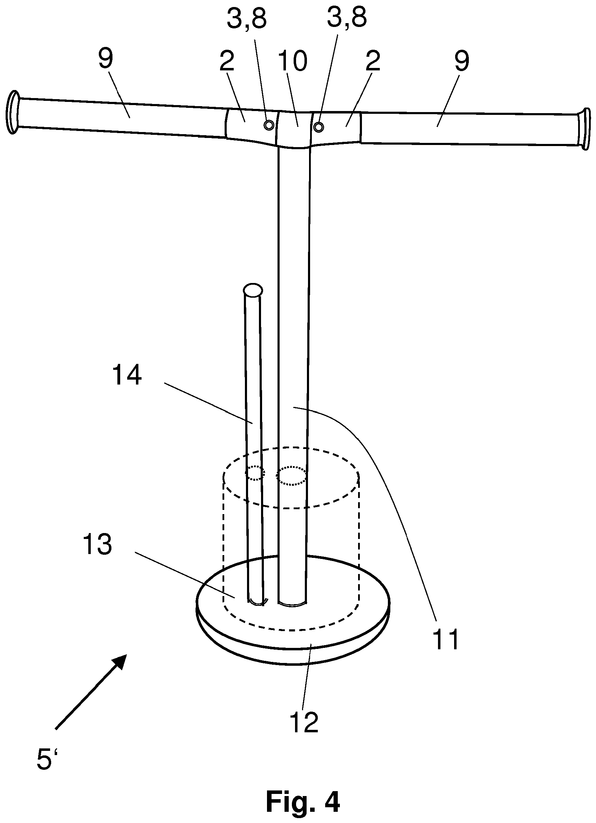

Fig. 4 zeigt einen Halter 5', bei dem das Fußteil 12 einen Aufsatz 13 aufweist. Der Aufsatz 13 fungiert als Stabilisierung, welche den Schwerpunkt des Halters 5' nach unten verlegt. Der Aufsatz 13 ist konkret als Gummiteil ausgestaltet, welches von der Stange 11 durchgriffen wird. Dem Fußteil 12 ist eine weitere Stange 14 zugeordnet, welche weitere Utensilien tragen oder halten kann.

Die in den Fig. 1 bis 4 gezeigten Vorrichtungen sind zur Verwendung im Haushalt, Sanitärbereich oder Garten geeignet und umfassen jeweils mindestens ein Gelenk 1 der hier beschriebenen Art.

### Bezugszeichenliste :

- 1: Gelenk
- 2: Schwenkkörper
- 2a: hülsenartiger Abschnitt von 2
- 2b: Eingriffabschnitt von 2
- 3: Schwenkachse
- 4: Statorkörper
- 5: Halter
- 6: Arretiermittel von 4
- 7: Ausnehmung von 4
- 8: Stiftelement von 2
- 9: Haltearm
- 10: Ständer
- 11: Stange
- 12: Fußteil
- 13: Aufsatz
- 14: weitere Stange

## Patentansprüche

1. Vorrichtung zur Verwendung im Haushalt, Sanitärbereich oder Garten, umfassend ein Gelenk (1), umfassend mindestens einen Schwenkkörper (2), der um eine Schwenkachse (3) relativ zu einem Statorkörper (4) verschwenkbar ist, wobei die Schwenkachse (3) und der Schwenkkörper (2) relativ zum Statorkörper (4) verschiebbar sind, wobei der Schwenkkörper (2) aus einer Hängelage, in welcher er verschwenkbar ist, in eine Schiebelage, in welcher er relativ zum Statorkörper (4) verschiebbar ist, verschwenkbar ist, wobei der Schwenkkörper (2) zumindest in einer Position seiner Schiebelage nicht mehr verschwenkbar, jedoch in eine Fixierlage verschiebbar ist,
wobei der Statorkörper (4) eine nut- oder schlitzartige Ausnehmung (7) aufweist und wobei die Schwenkachse (3) innerhalb der Ausnehmung (7) verschieb- und verfahrbar ist,
**dadurch gekennzeichnet, dass**
der Schwenkkörper (2) relativ zum Statorkörper (4) teleskopartig verschiebbar ist, um entweder das Verschwenken des Schwenkkörpers (2) zuzulassen oder dessen Verschwenken zu verhindern, wobei der Schwenkkörper (2) auf den Statorkörper (4) aufschiebbar ist.

2. Vorrichtung nach Anspruch 1, **dadurch gekennzeichnet, dass** der Schwenkkörper (2) nach dem Verschieben in einer Fixierlage durch Rastmittel oder Arretiermittel (6) reversibel arretierbar ist.

3. Vorrichtung nach einem der voranstehenden Ansprüche, **dadurch gekennzeichnet, dass** die Ausnehmung (7) einen Anschlag aufweist, über den die Schwenkachse (3) nicht hinausschiebbar ist.

4. Vorrichtung nach einem der voranstehenden Ansprüche, **dadurch gekennzeichnet, dass** die Schwenkachse (3) als Stiftelement (8) ausgestaltet ist, welches dem Schwenkkörper (2) zugeordnet ist.

5. Vorrichtung nach einem der voranstehenden Ansprüche, **gekennzeichnet durch** eine Ausgestaltung als Halter (5, 5'), wobei mindestens ein Haltearm (9) mit dem Schwenkkörper (2) verbunden oder einstückig mit diesem ausgebildet ist.

6. Vorrichtung nach einem der voranstehenden Ansprüche, **dadurch gekennzeichnet, dass** der Statorkörper (4) mit einem Ständer (10) oder einer Halterung verbunden oder einstückig mit diesem bzw. dieser ausgebildet ist.

7. Vorrichtung nach Anspruch 6, **dadurch gekennzeichnet, dass** dem Ständer (10) ein Aufsatz (13) und/ oder eine oder mehrere Stangen (11, 14) zugeordnet sind.

## Claims

1. Apparatus for use in the household, in sanitary facilities or in the garden, comprising a joint (1), comprising at least one pivoting body (2), which can be pivoted about a pivot-axis member (3) relative to a stator body (4), wherein the pivot-axis member (3) and the pivoting body (2) can be slid relative to the stator body (4), wherein the pivoting body (2) can be pivoted from a hanging position, in which it can be pivoted, into a sliding position, in which it can be slid relative to the stator body (4), wherein, at least in one setting of its sliding position, the pivoting body (2) is no longer pivotable, but can be slid into a fixed position, wherein the stator body (4) has a groove-like or slot-like aperture (7), and wherein the pivot-axis member (3) can be slid and displaced within the aperture (7),
**characterized in that**
the pivoting body (2) can be slid telescopically relative to the stator body (4) in order either to allow the pivoting body (2) to pivot or to prevent it from pivoting, wherein the pivoting body (2) can be slid onto the stator body (4).

2. Apparatus according to Claim 1, **characterized in that**, following the sliding operation, the pivoting body (2) can be reversibly arrested in a fixed position by latching means or arresting means (6).

3. Apparatus according to either of the preceding claims, **characterized in that** the aperture (7) has a stop beyond which the pivot-axis member (3) cannot be slid out.

4. Apparatus according to one of the preceding claims, **characterized in that** the pivot-axis member (3) is configured in the form of a pin element (8), which is assigned to the pivoting body (2).

5. Apparatus according to one of the preceding claims, **characterized by** being configured in the form of a holder (5, 5'), wherein at least one holding arm (9) is connected to the pivoting body (2) or is formed in one piece therewith.

6. Apparatus according to one of the preceding claims, **characterized in that** the stator body (4) is connected to an upright (10) or a mount or is formed in one piece therewith.

7. Apparatus according to Claim 6, **characterized in that** the upright (10) is assigned an attachment (13) and/or one or more rods (11, 14).

## Revendications

1. Dispositif à utiliser dans la maison, les sanitaires ou le jardin, comprenant une articulation (1), comprenant au moins un corps pivotant (2), qui peut être amené à pivoter autour d'un axe de pivotement (3) par rapport à un corps de stator (4), l'axe de pivotement (3) et le corps pivotant (2) pouvant être coulissés par rapport au corps de stator (4), le corps pivotant (2) pouvant être amené à pivoter d'un état de suspension, dans lequel il peut être amené à pivoter, dans un état de coulissement, dans lequel il peut être coulissé par rapport au corps de stator (4), le corps pivotant (2) ne pouvant plus être amené à pivoter au moins dans une position de son état de coulissement, mais pouvant coulisser dans un état de fixation, le corps de stator (4) présentant un évidement (7) en forme de rainure ou de fente et l'axe de pivotement (3) pouvant être coulissé et déplacé à l'intérieur de l'évidement (7),
**caractérisé en ce que**
le corps pivotant (2) peut être coulissé de manière télescopique par rapport au corps de stator (4), soit pour permettre le pivotement du corps pivotant (2), soit pour empêcher son pivotement, le corps pivotant (2) pouvant être enfilé sur le corps de stator (4).

2. Dispositif selon la revendication 1, **caractérisé en ce que** le corps pivotant (2) peut être bloqué de manière réversible dans un état de fixation après le coulissement par des moyens d'encliquetage ou des moyens de blocage (6).

3. Dispositif selon l'une quelconque des revendications précédentes, **caractérisé en ce que** l'évidement (7) présente une butée au-delà de laquelle l'axe de pivotement (3) ne peut pas être coulissé.

4. Dispositif selon l'une quelconque des revendications précédentes, **caractérisé en ce que** l'axe de pivotement (3) est conçu sous forme d'élément à broche (8), qui est associé au corps pivotant (2).

5. Dispositif selon l'une quelconque des revendications précédentes, **caractérisé par** une configuration en tant que support (5, 5'), au moins un bras de support (9) étant relié au corps pivotant (2) ou formé d'un seul tenant avec celui-ci.

6. Dispositif selon l'une quelconque des revendications précédentes, **caractérisé en ce que** le corps de stator (4) est relié à un montant (10) ou à une fixation ou est formé d'un seul tenant avec celui-ci ou celle-ci.

7. Dispositif selon la revendication 6, **caractérisé en ce qu'**un composant supérieur (13) et/ou une ou plusieurs tiges (11, 14) sont associés au montant (10).
